# EUROPÄISCHE PATENTANMELDUNG

(11) **EP 1 780 150 A2**
(43) Veröffentlichungstag der Anmeldung: **02.05.2007**
(21) Anmeldenummer: 06122969.6
(22) Anmeldetag: 26.10.2006
(51) Int. Cl.: B65G 15/34, A47F 9/04

(54) **Transportband an Kassen in Verbrauchermärkten und Fitnessstudios mit Werbeaufdruck**

(30) Priorität: 27.10.2005 DE 102005051968
(71) Anmelder: Frohn, Wolfgang, 69197 Schauenstein (DE); Weitz, Werner, 85283 Wolnzach (DE)
(72) Erfinder: Frohn, Wolfgang, 69197 Schauenstein (DE); Weitz, Werner, 85283 Wolnzach (DE)
(74) Vertreter: Lange, Heinke

(57) **Zusammenfassung**

Das Transportband an Kassen in Verbrauchermärkten und in Fitness-Studios entsprechend der vorliegenden Erfindung besteht aus vier Schichten, einer thermoplastischen oder duroplastischen Grundstruktur, einem damit auf der Unterseite der Grundstruktur verklebten Gewebe mit bestimmten Laufeigenschaften, das über die geeignete Zugstabilität und Verschleißfestigkeit beim Einsatz des Transportbandes verfügt, ein flexibles gegen Verzerrung stabilisiertes Flächengebilde an der Oberseite der thermoplastischen oder duroplastischen Grundstruktur, auf das ein Werbeaufdruck mittels Inkjet-Druck im Direktdruck-Verfahren aufgebracht ist, und eine auf das bedruckte gegen Verzerrung stabilisierte Flächengebilde aufgetragene Polyuhrethan-Schicht, eine aufgeklebte Polyuhrethan-Folie oder eine andere transparente Kunststoff-Beschichtung oder -Folie. Auf das flexible gegen Verzerrung stabilisierte Flächengebilde, das aus mindestens zwei synthetischen Fasern mit unterschiedlichen Schmelzpunkten besteht, wobei die Faser mit dem niedrigeren Schmelzpunkt zur Versteifung geeignet ist, wird das Bild oder der Werbeaufdruck im Direktdruck-Verfahren durch digitalen Inkjet-Druck aufgetragen. Bei dem Inkjet-Druck werden Pigment-Farbstoffe oder Pigment-Tinten verwendet.

## Beschreibung

Die Erfindung betrifft ein Transportband an Kassen in Verbrauchermärkten und Fitnessstudios mit Werbeaufdruck nach dem Oberbegriff des Hauptanspruchs.

Transportbänder an Kassen in Supermärkten mit mindestens dreischichtigem Aufbau und Werbeaufdruck sind bekannt. In der DE 89 10 684 U1 wird ein Transportband für Checkout-Anlagen und ein Verfahren zur Herstellung des Transportbandes beschrieben. Das Transportband besteht aus einer thermoplastischen Grundstruktur, welche mindestens einseitig mit einem Gewebe versehen ist, und welches an der außenliegenden Bandoberfläche mittels Pressen-Transferdruck bedruckt ist. Dieser Aufdruck kann entweder direkt auf der Grundstruktur oder auf der Gewebeschicht erzeugt werden und mit einem abriebfesten, lichtdurchlässigen Kunstfilm überdeckt sein. Das Gewebe kann ein Mehrlagengewebe mit versetzten Abbindepunkten sein.

Bei dieser Lösungen ist festzustellen, dass die Farben in die abdeckende transparente Schutzschicht migrieren, was zum Verschwimmen der Farben und Konturen führt, so dass die Transportbänder nach kurzer Zeit ein unscharfes Druckbild zeigen. Bei den Transfer-Druckverfahren bzw. den Transfer-Sublimationsverfahren werden Dispersionsfarben bei hohen Temperaturen im gasförmigen Zustand auf den zu bedruckenden Untergrund übertragen. In die anschließend auf die bedruckte Fläche aufgetragene Schutzschicht aus einem transparenten Kunststoff findet eine Migration der Dispersionsfarben statt, die nach einiger Zeit zu einem Verschwimmen des Druckes führt. Der fortschreitende Prozess hat sogar zur Folge, dass die Farbstoffmoleküle bis an die Oberfläche der Schutzschicht wandern. Besonders augenfällig wird diese Erscheinung, wenn die Bandoberflächen beim Verpacken face-to-face aufeinander liegen. Die Farben wandern dann von einer Oberfläche auf die andere. Es wird also das Bild der einen Oberfläche zusätzlich auf die andere Oberfläche verschwommen abgebildet.

Ein zweiter wesentlicher Nachteil besteht darin, dass sich außerdem das Gewebe beim Druck und besonders den nachfolgenden Arbeitsschritten verziehen kann, wodurch eine verzerrte Wiedergabe des Druckbildes entsteht. Versuche, das Gewebe mittels Appretur bzw. Aufbringen von chemischen Substanzen gegen Verzug oder Verzerrungen zu verfestigen, brachten keinen Erfolg, da zum einen das Bedrucken nicht einwandfrei möglich war, und zum anderen das Klebeverhalten und die Haltbarkeit des Transportbandes negativ beeinflusst wurden.

Es ist deshalb die Aufgabe der vorliegenden Erfindung, ein Transportband vorzuschlagen, auf das verzerrungsfreie und dauerhaft klare Aufdrucke von Bildern aufgebracht werden können.

Diese Aufgabe wird durch die Merkmale des kennzeichnenden Teils des Anspruchs 1 gelöst.

Das Transportband an Kassen in Verbrauchermärkten und in Fitness-Studios entsprechend der vorliegenden Erfindung besteht aus vier Schichten, einer thermoplastischen oder duroplastischen Grundstruktur, einem damit auf der Unterseite der Grundstruktur verklebten Gewebe mit bestimmten Laufeigenschaften, das über die geeignete Zugstabilität und Verschleißfestigkeit beim Einsatz des Transportbandes verfügt, ein flexibles gegen Verzerrung stabilisiertes Flächengebilde, das aus mindestens zwei synthetischen Fasern mit unterschiedlichen Schmelzpunkten besteht, wobei die Faser mit dem niedrigeren Schmelzpunkt zur Versteifung geeignet ist, an der Oberseite der thermoplastischen oder duroplastischen Grundstruktur, auf das ein Werbeaufdruck mittels Inkjet-Druck im Direktdruck-Verfahren aufgebracht ist, und eine auf das bedruckte gegen Verzerrung stabilisierte Flächengebilde aufgetragene Polyuhrethan-Schicht, eine aufgeklebte Polyuhrethan-Folie oder eine andere transparente Kunststoff-Beschichtung oder -Folie. Das flexible, gegen Verzerrung stabilisierte Flächengebilde, stellt erfindungsgemäß ein Gewebe, ein Vlies oder ein Gewirke dar, auf das das Bild oder der Werbeaufdruck im Direktdruck-Verfahren durch digitalen Inkjet-Druck aufgetragen wird, bei dem Pigment-Farbstoffe oder Pigment-Tinten verwendet werden.

Das aus einer Fasermischung bestehende Gewebe, Vlies oder Gewirke, das als Druckgrund für das Transportband verwendet werden soll, wird vor dem Bedrucken einer thermischen Behandlung unterzogen, bei der nur ein bestimmter Anteil der Fasern, nämlich der Anteil der Fasern mit dem niedrigeren Schmelzpunkt, verschmolzen wird, damit der Druckgrund und das Transportband die erforderlichen Eigenschaften erhalten. An die Fasern werden deshalb bestimmte Bedingungen geknüpft, denn nach der thermischen Behandlung, bei der ein bestimmter Anteil der Fasern im Gewebe, Vlies oder Gewirke verschmolzen wird, muss das fertige flexible, gegen Verzerrung stabilisierte Flächengebilde die erforderliche Haltbarkeit, eine bestimmte Elastizität, und eine bestimmte Biegeflexibilität besitzen und es darf nicht vergilben.

Werden zwei synthetische Fasern zur Herstellung des Druckgrundes verwendet, müssen diese unterschiedliche Schmelzpunkte besitzen, wobei die Faser mit dem niedrigen Schmelzpunkt verschmolzen wird und dadurch den Druckgrund verfestigt. Das Verschmelzen der Fasern mit der niedrigen Schmelztemperatur wird unterhalb der Schmelztemperatur der zweiten synthetischen Faser durchgeführt. Es kommt dann zum Verschmelzen der Fasern mit dem niedrigen Schmelzpunkt, während die Fasern mit dem höheren Schmelzpunkt nicht angeschmolzen werden. Das Flächengebilde wird so nur zu einem bestimmten Grad verfestigt. Werden mehrere synthetische Fasern verwendet, muss mindestens eine Faser einen Schmelzpunkt besitzen, bei der der Druckgrund verfestigt werden kann.

Das flexible, gegen Verzerrung stabilisierte Flächengebilde kann auch ein Gewebe, Vlies oder Gewirke aus einer Mischung von synthetischen und nichtsynthetischen Fasern darstellen. Da die Versteifung nur mittels synthetischer Fasern vorgenommen werden kann, muss dann mindestens eine der Fasern synthetisch sein und eine Schmelztemperatur besitzen, die unterhalb der Zerstörungstemperatur der nichtsynthetischen Faser oder Fasern liegt, damit das fertige flexible gegen Verzerrung stabilisierte Flächengebilde nicht vergilbt oder zerstört wird.

Es ist aber auch möglich, dass das flexible gegen Verzerrung stabilisierte Flächengebilde eine Kunststoff-Folie darstellt, die zur Aufnahme des Druckbildes in der erforderlichen Qualität geeignet ist und auch die notwendige Haltbarkeit aufweist.

Bei der Fertigstellung des Transportbandes entsprechend der vorliegenden Erfindung wird zunächst die Grundstruktur auf der Unterseite mit einem Gewebe verklebt. Nach dem Bedrucken des flexiblen gegen Verzerrung stabilisierten Flächengebildes wird es mit der thermoplastischen oder duroplastischen Grundstruktur verschmolzen oder verklebt. Das derart bedruckte Transportband an Kassen in Verbrauchermärkten und in Fitness-Studios ist mit einer flexiblen, transparenten, kratzunempfindlichen Polyuhrethan-Schicht oder einer anderen transparenten Kunststoffschicht auf der Bandoberseite versiegelt.

Der besondere Vorteil der vorliegenden Erfindung besteht darin, dass ein verzerrungsfreier Aufdruck mit dauerhaft sauberen, klaren Konturen und Farben und großer Haltbarkeit erzeugt wird, da die Farben nicht in die kratzunempfindliche Polyuhrethan-Schicht oder einer anderen transparenten Kunststoffschicht, die das Druckbild schützt und die Funktionseigenschaften des Transportbandes bestimmt, migrieren. Der speziell für diese Transportbänder entwickelte Druckgrund besitzt eine besondere Längs- und Diagonalstabilität, die den Aufdruck in den nachfolgenden Bearbeitungsgängen zur Herstellung der Transportbänder nicht verzerrt.

Der Druckgrund, also das Gewebe, Gewirke oder das Vlies, werden in einem thermischen Verfahren ohne chemische Zusätze verfestigt. Seine Herstellung ist deshalb sehr umweltfreundlich.

Ein weiterer wesentlicher Vorteil entsteht dadurch, dass bei einem digitalen Druck-Verfahren variable Rapportlängen in den Druckmotiven einfach herstellbar sind.

Die Erfindung soll anhand von Ausführungsbeispielen erläutert werden.

Zur Herstellung des Druckgrundes kann in einem ersten Ausführungsbeispiel eine Polyestergarn aus zwei Faserkomponenten verwendet werden, wobei die Schmelztemperatur der einen Faserkomponente bei etwa 100 °C und die Schmelztemperatur der anderen Faserkomponente bei etwa 256 °C lag. Die thermische Behandlung zum Verschmelzen der einen Faserkomponente lag bei 200 ° C. Das so hergestellte Flächengebilde besaß die erforderliche Versteifung für die Verzugsfreiheit und erfüllte gleichzeitig die Anforderungen an Elastizität und Biegeverhalten eines Transportbandes. Das Flächengebilde wurde mittels Inkjet-Druck im Direktdruck-Verfahren mit Pigmenttinte bedruckt. Das bedruckte Flächengebilde wurde anschließend mit der Grundstruktur durch Kleben oder Verschmelzen verbunden und mit einer Polyuhrethan-Schicht versehen. Die Grundstruktur war vorher bereits auf der Unterseite mit einem Gewebe mit bestimmten Laufeigenschaften verklebt worden.

In einem zweiten Ausführungsbeispiel bestand das flexible gegen Verzerrung stabilisierte Flächengebilde aus Baumwoll- und Polyesterfasern. Die Polyesterfasern hatten eine Schmelztemperatur von 100 ° C. Die Versteifung des Flächengebildes wurde bei 160 °C vorgenommen.

## Patentansprüche

1. Transportband an Kassen in Verbrauchermärkten und in Fitness-Studios bestehend aus mindestens drei Schichten, einer Grundstruktur und einem damit verklebten Gewebe auf der Unterseite der Grundstruktur und einer Schicht mit einem Werbeaufdruck auf der Oberseite der Grundstruktur, die von einem abriebfesten, lichtdurchlässigen Kunststofffilm bedeckt ist, **dadurch gekennzeichnet, dass** die Grundstruktur thermoplastisch oder duroplastisch ist, dass mit der Oberseite der thermoplastischen oder duroplastischen Grundstruktur ein flexibles gegen Verzerrung stabilisiertes Flächengebilde verbunden ist, auf das ein bildmäßiger Aufdruck mittels digitalem Inkjet-Druck im Direktdruck-Verfahren unter Verwendung von Pigment-Farbstoffe oder Pigment-Tinten aufgebracht ist, dass das flexible gegen Verzerrung stabilisierte Flächengebilde ein Gewebe, Vlies oder Gewirke darstellt, das aus mindestens zwei synthetischen Fasern mit unterschiedlichen Schmelzpunkten besteht, wobei die Faser mit dem niedrigeren Schmelzpunkt zur Versteifung geeignet ist, und dass auf das bedruckte gegen Verzerrung stabilisierte Flächengebilde eine transparente Kunststoffschicht aufgetragen oder eine transparente Kunststoff-Folie aufgeklebt ist.

2. Transportband nach Anspruch 1, **dadurch gekennzeichnet, dass** die transparente Kunststoffschicht eine Polyuhrethan-Schicht und die transparente Kunststoff-Folie eine Polyuhrethan-Folie darstellt.

3. Transportband nach Anspruch 1, **dadurch gekennzeichnet, dass** das flexible gegen Verzerrung stabilisierte Flächengebilde ein Gewebe, Vlies oder Gewirke eine Mischung von synthetischen und nichtsynthetischen Fasern darstellt, wobei mindestens eine der Fasern synthetisch ist und eine Schmelztemperatur besitzt, die unterhalb der Zerstörungstemperatur der nichtsynthetischen Fasern liegt.

4. Transportband nach Anspruch 1, **dadurch gekennzeichnet, dass** das flexible gegen Verzerrung stabilisierte Flächengebilde eine Kunststoff-Folie darstellt.
